# EUROPEAN PATENT APPLICATION

(11) **EP 3 567 828 A1**
(43) Date of publication of application: **13.11.2019**
(21) Application number: 19154479.0
(22) Date of filing: 30.01.2019
(51) Int. Cl.: H04L 29/06, H04L 29/08

(54) **COUNTERING THREATS IN IN-VEHICLE NETWORKS AND CONTROLLERS**

(30) Priority: 07.05.2018 EP 18171113
(71) Applicant: Continental Automotive GmbH, 30165 Hannover (DE)
(72) Inventor: Iftene, Emanuel-Florin, 700425 Iasi (RO); Oancea, Irina-Georgiana, 737485 Stanilesti (RO)

(57) **Abstract**

The present invention relates to security issues in networks, particularly to threats in in-vehicle networks. Caused by threats, controllers may be affected as well. The invention comprises a method for identifying a threat, particularly multiple threats, on members (200, 300, 400, 500, 600, 700), connected by an internal communication device (200), particularly within a moveable object (100), the members comprising at least one of: a sensor (300), capable of sensing data of the environment and/or of a part of the moveable object (100), an actuator (400), capable of controlling at least one function of at least one part of the moveable object (100), a controller (500), capable of receiving data, directly or indirectly, from the at least one sensor and/or capable of controlling at least one function of at least one actuator (400), a network (600), connecting the communication device (200) to an external system (900), and a monitoring system (700), connected to at least one of the members and capable of acquiring data from and/or sending data to said members, said method comprising at least the steps of: a) acquiring data from said members (200, 300, 400, 500, 600, 700), according to a first pattern, b) evaluating said data according to a second pattern for the threat, to identify the threat.

## Description

The present invention relates to security issues in networks, particularly to threats in in-vehicle networks. Caused by threats, controllers may be affected as well.

In-vehicle networks may be threatened by hacker attacks. These attacks may lead to dangerous situations, particularly in vehicles. The methods and the system introduced in this application may, however, also be applied to other systems, particularly to systems that are connected to a network.

Hacker attacks, in some cases, may lead to prompt or near-term reactions of the system that is threatened. In other cases, the system's reaction may come significantly later in time, e.g. in cases where a Trojan is implanted. These reactions of the system may look like a general misbehaviour of the system, whose root cause is difficult and/or complex to be found out.

Programs or systems that detect hacker attacks and/or deal with security issues are basically known in the art. However, there are several gaps in them: Often, they only address a specific type of attacks. Correlations between resource usage, e.g. of controllers, are neglected. The security countermeasures are not correlated.

Considering this state of the art, it is task of this invention to overcome the drawbacks and/or disadvantages of this state of the art, at least partly.

This task is solved by a method according to claim 1, a system according to claim 9, a program element, and a computer-readable device.

The invention includes a method for identifying a threat, particularly multiple threats, on members, connected by an internal communication device, particularly within a moveable object. Moveable objects may by airplanes, helicopters, thrones, or the like, but also water-based vehicles, e.g. ships, or land-based vehicles, e.g. cars, trucks, movable machines, or the like. The invention is not limited to communication devices within a moveable object; it can be used for all kind of communication devices.

The internal communication device may be of any topology: This may be a bus, a star, a ring, a tree, a mesh, a hypercube, and/or there may be several of these connection systems in the moveable object.

The members that may be impacted by a threat comprise at least one of: a sensor, an actuator, a controller, a network, and/or a monitoring system. There may be systems that comprise a plurality of each of these members. Other systems may have members that are not accessible by the communication device. Again other systems may only have one or only a few of said classes of members, but not all of them. Hence, using, in the following, the word "member" in singular may be directed to only one member, to a few members, or to even a plethora of members.

The sensor is capable of sensing data of the environment and/or of a part of the moveable object. Sensing the environment at least comprises a sensor for the surrounding temperature, for brightness or light, for rain, for fixed or moving barriers, which may be sensed by a radar system, for other moveable objects, which may be sensed by networks, e.g. 5G-networks, and others. Sensing parts of the moveable object at least comprises data from the motor, e.g. oil pressure and temperature, tires' pressure, data from the breaking system, from the steering system, from the air condition, from the driver's pedals, and other systems or components within the moveable object.

The actuator is capable of controlling at least one function of at least one part of the moveable object. Examples may be brakes, the throttle or the torque-control of the motor, and so on.

The controller is capable of receiving data, directly or indirectly, from the at least one sensor and/or capable of controlling at least one function of at least one actuator. The controller is sometimes quoted as ECU (electronic control unit). The controller may control a closed system, e.g. an anti-lock braking system (ABS). The controller may be triggered by at least one sensor and/or control at least one actuator. The controller may control an infotainment system. The controller usually comprises memory, e.g. SRAM, DRAM, Flash, EPROM, or discs.

The network connects the communication device to an external system. The network may be wired or wireless. The external system may have administrative function or may provide contents for the infotainment system.

The monitoring system is connected to at least one of the members and capable of acquiring data from and/or sending data to said members. For instance, there may be (uncomplex) sensors that only send data, but are not able to receive any data. There may be (uncomplex or very secure) actuators that only receive data, but are not able to send any data. Most members both send and receive data. This property, of course, may open said members to attacks.

Said method comprises at least following steps:
a) acquiring data from said members, according to a first pattern;
b) evaluating said data according to a second pattern for the threat, to identify the threat.

The first pattern may be a pre-defined pattern and/or adaptable pattern. The first pattern may have pre-defined points in time, where data are acquired. For instance, it could be a pre-defined pattern to acquire, at a time t1, data from the communication device, e.g. the current bus load, and also from all brake-sensors. At a time t2, data from the network and from ECU 3 and 5 may be acquired. Data are also acquired from the monitoring system itself, because this could be overloaded, shut down, erroneous, or in another malfunction.

The data acquired are then evaluated according to a second pattern. The second pattern searches for one or many threads, to identify the threat, when it occurs. The second pattern searches, for instance, for an overload of the communication device or a lacking keep-alive message from the network. A specific strength of the second pattern is, not only to look for one single limitation or malfunction of one part of the system, but for many of them. Thus, using the second pattern - or a combination of the first pattern, followed by the second pattern - can find complex misbehaviour that may be caused by current threat or also by an older one, which, e.g., placed a Trojan. Using this structured way of searching misbehaviour gives room to a by far better analysis capability than can be achieved by a less systematic approach. Another advantage of this approach is to enable the system to recognize unknown error-patterns, which can be analysed systematically, then. Based on these analyses, the system may become a learning system. The newly recognized patterns may also be distributed to other similar systems that are also based on the recognition on said "second pattern". The second pattern is also able to take reduced performance of any of the members into account, e.g. partial failure of the ABS or the motor being in limp-home mode.

In one embodiment, the system performs a step c), by reacting on the threat according to a third pattern. Examples are to switch-over to and second, redundant communication bus, to block a sender from the network, to degrade one or more of the members to a lower performance. The second pattern may also trigger the execution of one or more small programs (similar to "Apps") that offers well-adapted reactions on the threat or threats, which have been recognized.

In several embodiments, steps a) to c) are run repeatedly.
In one embodiment, said steps are run in a serial matter.

In one embodiment, said steps are run in parallel, i.e. one monitoring sub-system performs step a), while another one performs step b), and again another one performs step c). This increases the analytic capability - and hence the performance - of the monitoring system in a quite effective way, concerning effect and cost.

In one embodiment, said steps are run in a pipelined matter, i.e. their execution is partly overlapped. This is another quite effective way to increases the analytic capability.

In one embodiment, the first pattern, the second pattern, and/or the third pattern can be changed when operating the monitoring system, particularly by a learning module. This gives the system the benefit of a high flexibility, particularly gives room to an easy upgrade, when new kind of threats appear, and, thus, increases the overall security and safety of the system.

In one embodiment, the monitoring system acquires, at predefined points in time, step a), at least one of: a traffic volume is acquired from the communication device, a keep-alive message or a value is acquired from the sensor, a keep-alive message is acquired from the actuator, a resource usage is acquired from the controller and/or its functional parts, a network load is acquired from the network, and/or a self-check is done on the monitoring system.

In one embodiment, the monitoring system evaluates, at predefined points in time, step b). The evaluation may be done right after acquiring the base-data, or at a time that is suitable to consider also data acquired later or to consider some history of the data acquired. The evaluation comprises at least one of: the traffic volume acquired from the communication device is within a predefined range, the keep-alive message acquired from the sensor has a predefined value or the value acquired from the sensor is within a predefined range, the keep-alive message acquired from the actuator has a predefined value, the resource usage acquired from the controller and/or its functional parts, is within a predefined range, the network load acquired from the network is within a predefined range, and/or the self-check done on the monitoring system has a predefined result, wherein step b) includes a systematic cross-check if the values checked fulfil predefined conditions.

In one embodiment, when evaluating the values in step b), a predefined part of the history of said values is considered. This further increases the analysing capabilities.

In one embodiment, when the threat has been identified, the monitoring system performs step c), reacting on the evaluation of said members, comprises implementing at least one of: sending an alarm to an alarm device and/or sending a message to an external device, performing a safety strategy on the sensor that is affected by the threat, performing a safety strategy on the actuator that is affected by the threat, performing a safety strategy on the controller that is affected by the threat, performing a safety strategy on the network that is affected by the threat, performing a safety strategy on the monitoring system that is affected by the threat.

The present invention also comprises a monitoring system for identifying a threat, particularly multiple threats, on members, connected by a communication device, particularly within a moveable object, the members comprising at least one of: a sensor, capable of sensing data of the environment and/or of a part of the moveable object, an actuator, capable of controlling at least one function of at least one part of the moveable object, a controller, capable of receiving data, directly or indirectly, from the at least one sensor and/or capable of controlling at least one function of at least one actuator, a network, connecting the communication device to an external system, and the monitoring system, connected to at least one of the members and capable of acquiring data from said members, where the monitoring system is arranged for executing steps a) and b) and, optionally, step c).

The present invention also comprises a program element, which is able to execute steps a) and b) and, optionally, step c) on a processing unit, which is part of the monitoring system.

The present invention also comprises a program element, which is able to execute step a), b), or c), based on the first pattern, the second pattern, or the third pattern, respectively, when executed on a processing unit, which is part of the monitoring system.

The present invention also comprises a computer-readable device, where the program element for execute step a), b), or c), and/or based on the first pattern, the second pattern, or the third pattern, respectively, is stored on.

In one embodiment,
Looking at the completed system, it addresses the security, particularly for in-vehicle networks and ECUs. In one embodiment, it uses a number of software modules that, possibly, collaborate with each other, monitor the in-vehicle network and launches a set of countermeasures based on an attack, when recognized. Each ECU of a moveable object comprises applications that aid the driver. The system is designed to protect the in-vehicle network and the application(s) deployed in the ECU.

In one embodiment, the system comprises redundant (replicated) modules for each existing application on the ECU. The replicated application may have limited capability and/or functionality. In one embodiment, this replicated application resides on a dedicated and separated memory, which is, in some embodiments, is designed as read only.

The system is arranged to react on at least following categories:
- Unimplemented method call, which refers to method calls to a function that has no handler implemented for the requested method;
- Invalid data, which refers to a data packet that is invalid for the receiving application function;
- So-called "Internally restricted", which refers to a method call to a function that is restricted and available only under specific conditions, e.g. requires some form of authentication;
- Unknown, which designates type or error that does not fit in the above defined classes;

The communication device may be checked. e.g. for following availability issues:
- quantify the communication bus load (like entropy based approach);
- have a mapping of an alternate/tailback bus if available by design;
- identify available and/or alternate communication buses to route data packets;
- notify gateways or other ECU(s) to use or switch to identified alternate communication bus;
- be able to switch on the fly the communication bus to another unaffected/available communication bus;
- be able to switch off the affected communication bus;
- forward the data to module 2 and inform module 2 to future inspect the data from the bus affected.

A module to identify the attack-type may be based:
- on specific log messages generated by the receiving application for unimplemented
   calls;
- on specific log messages generated by the receiving application for internally restricted/limited calls;
- on specific log messages generated by the receiving application for invalid data class;
- on specific log messages generated by the receiving application for unknown error class;
- on a whitelist approach for data packet content;
- on a blacklist approach.

Reactions may comprise:
- notification if the data packet is not in the whitelist;
- if a blacklist method is also implemented and the received data is blacklisted, block the packet, log the event and notify;
- the received data packet from module 2 will not be forwarded as it is to the application, but instead, it will be a newly created object with the whitelisted and predefined data structure that will have the received and expected values; any additional unexpected values included in the received data packet will be ignored, discarded and notify module 5 for the event;
- if a received data is not in the whitelist or blacklist, inform module to block identical future packets.

A module to monitor the system resources may comprise:
- monitor the load of the hardware resources like CPU, memory, storage, communication bus;
- evaluate the attack impact on the system, based on the usage of the monitored resources;
- evaluate the remaining time until the affected resource{s) exhaustion;
- notify module on the available time to react based on available/affected system resources.

A module to launch specific countermeasures and coordinate modules may comprise:
- Based on the correlation between all the received data from other modules the false positive reaction will be lowered;
- The module will decide when and what countermeasure will be deployed;
- Will request to all the coordinated modules to react in a specific way;
- Will decide the switch between full and limited application functionality;
- Basically, the countermeasures launched by the module5 will be a combination of requests for capabilities implemented in each coordinated module: e.g. switch communication bus, block sender/source data, block data forward to destination, time limit, rate limit, close full application and start the limited one, etc.

A module to initiate the secure state of the vehicle may comprise:
- coordinate and synchronize the switch between full and limited application functionality;
- shutdown the full functionality, hence the attack surface of the full application;
- start the limited capabilities application;
- notify other affected systems to work in degraded mode with the activated limited function capability if needed;
- notify the driver.

The proposed protection system will protect the ECU not only against the attacks launched from external sources but could also be used to prevent the ECU to mount an attack against other ECU{s) by applying the same rules to the outgoing packets originating from the installed applications.

On a closed network environment, like the in-vehicle network classes of attacks may comprise:
- availability attack - Flood or DoS attacks;
- invalid data packets - spoofed or tampered data packets;
- unauthenticated or unauthorized data packets.

The invention is illustrated by some embodiments, which are shown in figures.

The figures depict:
Fig. 1: Example system according to the present invention;
Fig. 2: Example of a first pattern;
Fig. 3: Example use case according to the present invention.

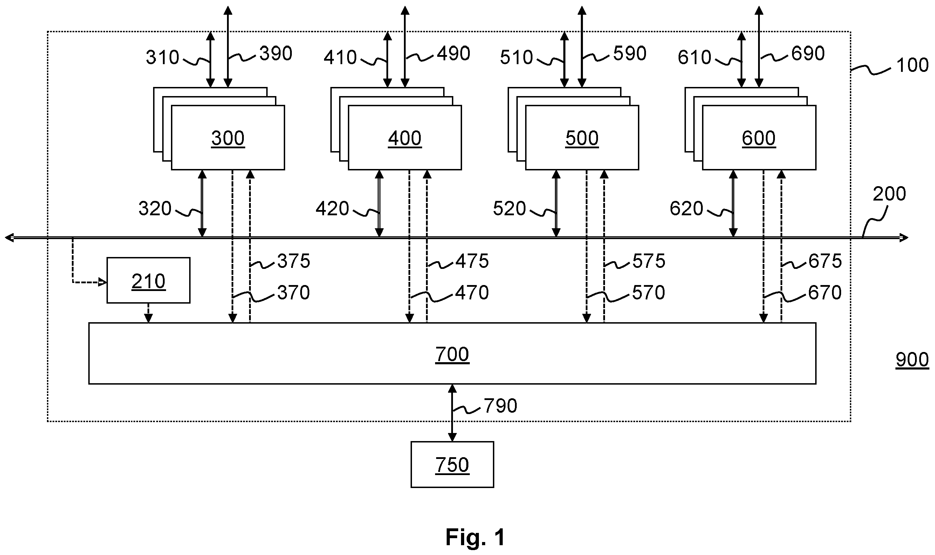

Fig. 1 is an example system within a moveable object 100, comprising the so-called "members", an internal communication device 200, a sensor 300, an actuator 400, a controller 500, a network 600, and a monitoring system 700. The components are available in multiple incarnations, depicted by multiple, "stacked" elements. All the members are connected, via connections 320, 420, 520, 620 to communication device 200, which is implemented as a bus. The monitoring system 700 is arranged to get data from each of the members, via sending connections 370, 470, 570, 670 and receive data via receiving connections 375, 475, 575, 675. Data from the bus 200, e.g. the bus load, are received from module 210. Some sensors 300 only send data to monitoring system 700. Some actuators 400 only receive data from monitoring system 700. The members have connections to components within the moveable object 100, namely connections 310, 410, 510, 610, and connections to components that sense the environment 900, i.e. connections 390, 490, 590, 690.

In case the network 600 causes an overload, this is seen by the monitoring system 700, because it receives alarm-data both from network 600 and from bus 220, via module 210. It can then, for instance set reactions on one of the controllers 500, thus limiting the impact of this attack immediately. Furthermore, an alarm is sent to an alarm device 750ln addition, a message may be sent to an external device 760 (not depicted), to perform further reactions.

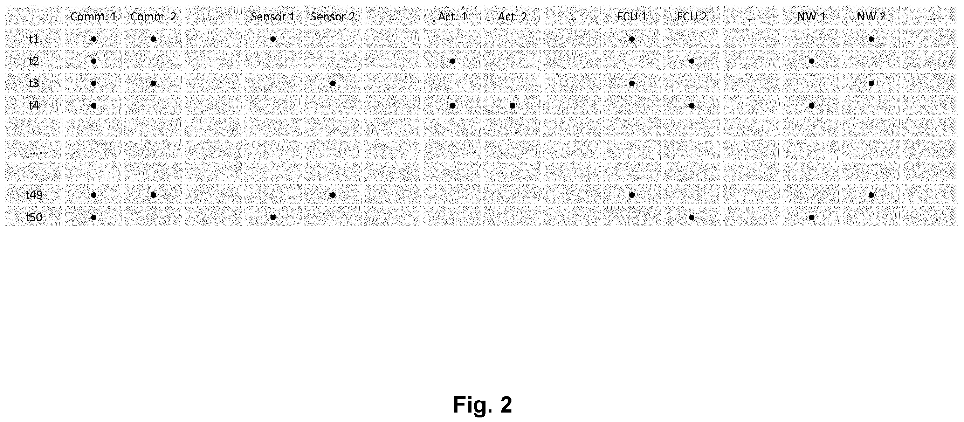

Fig. 2 gives an impression of the first pattern. At t1, Comm.1 and Comm. 2 (both are communication devices 200), Sensor 1 (sensor 300), ECU 1, and NW 2 (network 600), send data to monitoring system 700. The second pattern, for instance, describes error-scenarios that may be derived from the members', when exceeding of a predefined value.

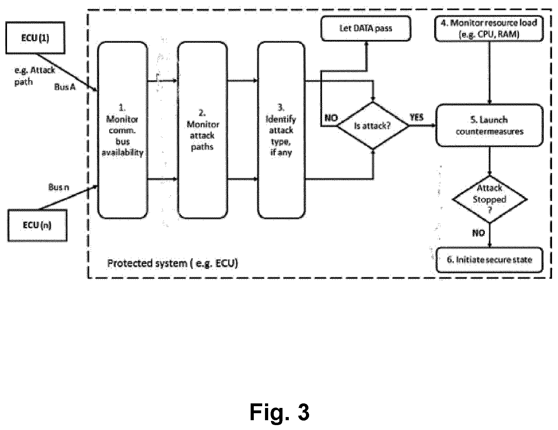

Fig. 3 shows a use case example, depicted a simplified system with an ongoing attack, type flood, on the Bus (A) from the ECU(1). The module 1 detects that there is a high load on Bus-A, but will let the data pass to module 2. Module 2 is notified to closely monitor the affected bus and module 5 of the load value. The module 1 will check for and prepare to switch to an alternate communication path that will be used in communication with other ECU(s) that are connected to Bus-A, if a redundant communication path exists. The module 2 will check who generates high traffic load - if the sending ECU has the proposed system implemented - then signal to module 2 of the sending ECU to block the data on the sending side. If a data rate threshold is defined, then module 2 will also impose a predefined traffic limit by rate limiting the data packets forwarded to module 3 at a rate specified by the receiving application. Module 2 will notify module 5 of the event and include specific info like source, destination of the packet and affected bus. The module 2 will continue forwarding data packets to module 3 with a data rate limit imposed if necessary. Module 3 will deeply inspect the received data packet and forward to the destination application if the data is expected, required and whitelisted. If the data is not expected in this timeframe by any local application/function then module 3 will block the data packet, notify the module 5 on the event and instruct the module 2 to block future identical packets for a specified period of time. If the data packet is not expected at all in this system, is not in the whitelist of module 3, then module 3 will instruct the module 2 to block future identical packets.

## Claims

1. Method for identifying a threat, particularly multiple threats, on members (200, 300, 400, 500, 600, 700), connected by an internal communication device (200), particularly within a moveable object (100), the members comprising at least one of:
a sensor (300), capable of sensing data of the environment and/or of a part of the moveable object (100),
an actuator (400), capable of controlling at least one function of at least one part of the moveable object (100),
a controller (500), capable of receiving data, directly or indirectly, from the at least one sensor and/or capable of controlling at least one function of at least one actuator (400),
a network (600), connecting the communication device (200) to an external system (900), and
a monitoring system (700), connected to at least one of the members and capable of acquiring data from and/or sending data to said members,
said method comprising at least the steps of:
a) acquiring data from said members (200, 300, 400, 500, 600, 700), according to a first pattern,
b) evaluating said data according to a second pattern for the threat, to identify the threat.

2. Method according to claim 1, further including the step: c) reacting on the threat according to a third pattern.

3. Method according to claim 1 or 2,
wherein steps a) to c) are run repeatedly, in a serial, a parallel or a pipelined matter.

4. Method according to any of the preceding claims,
where the first pattern, the second pattern, and/or the third pattern can be changed when operating the monitoring system (700), particularly by a learning module (708).

5. Method according to any of the preceding claims,
wherein, at predefined points in time, the monitoring system (700) performs step a), by at least one of:
a traffic volume is acquired from the communication device (200),
a keep-alive message or a value is acquired from the sensor (300),
a keep-alive message is acquired from the actuator (400),
a resource usage is acquired from the controller (500) and/or its functional parts,
a network load is acquired from the network (600), and/or
a self-check is done on the monitoring system (700).

6. Method according to any of the preceding claims,
wherein, at predefined points in time, the monitoring system (700) performs step b), by evaluating at least one of:
the traffic volume acquired from the communication device (200) is within a predefined range,
the keep-alive message acquired from the sensor (300) has a predefined value or the value acquired from the sensor (300) is within a predefined range,
the keep-alive message acquired from the actuator (400) has a predefined value, the resource usage acquired from the controller (500) and/or its functional parts, is within a predefined range,
the network load acquired from the network (600) is within a predefined range, and/or
the self-check done on the monitoring system (700) has a predefined result,
wherein step b) includes a systematic cross-check if the values checked fulfil predefined conditions.

7. Method according to claim 6,
wherein evaluating the values in step b) includes evaluating a predefined part of the history of said values.

8. Method according to any of the preceding claims,
wherein, when the threat has been identified, the monitoring system (700) performs step c), reacting on the evaluation of said members, by implementing at least one of:
sending an alarm to an alarm device (750) and/or sending a message to an external device (760),
performing a safety strategy on the sensor (300) that is affected by the threat,
performing a safety strategy on the actuator (400) that is affected by the threat,
performing a safety strategy on the controller (500) that is affected by the threat,
performing a safety strategy on the network (600) that is affected by the threat,
performing a safety strategy on the monitoring system (700) that is affected by the threat.

9. Monitoring system (700) for identifying a threat, particularly multiple threats, on members (200, 300, 400, 500, 600, 700), connected by a communication device (200), particularly within a moveable object (100), the members comprising at least one of:
a sensor (300), capable of sensing data of the environment and/or of a part of the moveable object (100),
an actuator (400), capable of controlling at least one function of at least one part of the moveable object (100),
a controller (500), capable of receiving data, directly or indirectly, from the at least one sensor and/or capable of controlling at least one function of at least one actuator (400),
a network (600), connecting the communication device (200) to an external system (900), and
the monitoring system (700), connected to at least one of the members and capable of acquiring data from said members,
where the monitoring system (700) is arranged for executing a method according to one of the preceding claims.

10. Program element, which is arranged to execute a method according to one of the claims 1 to 8, when executed on a processing unit (705), which is part of the monitoring system (700).

11. Program element, which is arranged to execute step a), b), or c), based on the first pattern, the second pattern, or the third pattern, respectively, when executed on a processing unit (705), which is part of the monitoring system (700).

12. Computer-readable device, where the program element according to claim 10 or 11 is stored on.
